# EUROPEAN PATENT APPLICATION

(11) **EP 3 466 767 A1**
(43) Date of publication of application: **10.04.2019**
(21) Application number: 17194852.4
(22) Date of filing: 05.10.2017
(51) Int. Cl.: B60R 11/04, H04N 5/225

(54) **ATTACHMENT FOR A CAMERA MODULE IN A CAMERA HOUSING AND A CAMERA MODULE**

(71) Applicant: Veoneer Sweden AB, 447 83 Vårgårda (SE)
(72) Inventor: GRAAN, Hans, 59172 Motala (SE)
(74) Representative: Müller Verweyen

(57) **Abstract**

An attachment for a camera module (1) in a camera housing (6), wherein the camera module (1) comprises
-a lens objective (2),
-a printed circuit board (3) mounted at a backside of the lens objective (2), and
-an image sensor (4) arranged on the printed circuit board (3),
wherein
-the camera module (1) is extending with the lens objective (2) through an opening (5) of the camera housing (6), and
-the camera module (1) is provided with at least one radial protruding abutment (7), which overlaps the rim of the opening (5) at an inner side of the camera housing (6) when the camera module (1) is mounted in the camera housing (6), and
-a retainer (8) is provided at the inner side of the camera housing (6), and
-at least one spring (9) is provided which is supported at a first end (10) by the retainer (8) and which tensions the camera module (1) with the abutment (7) via a second end (11) against the camera housing (6).3

## Description

The invention relates to an attachment for a camera module in a camera housing comprising the features of the preamble of claim 1 and a camera module comprising the features of the preamble of claim 6.

Camera modules for motor vehicles comprise in general a lens objective and a printed circuit board (PCB) with an image sensor arranged thereon and are attached in a camera housing which is fixed for example behind the windscreen of the vehicle.

In the assembly process of the camera module, the lens objective is usually aligned relative to the image sensor in order to compensate for manufacturing tolerances of the lens objective and tilt or misalignment of the image sensor, which would otherwise lead to a deterioration of the image quality. Once the optimal position and orientation of the lens objective has been determined, it is conventionally fixed relative to the image sensor by a glue joint between the lens objective and the front of the lens holder. However, since the lens objective is usually rotationally symmetrical around the optical axis, a roll angle displacement of the image sensor cannot be corrected by rotating the lens objective relative to the image sensor in the alignment process. Therefore, in particular for stereo systems but also for mono systems, a laborious roll alignment has to be performed during mounting of the camera modules into an external camera housing part by rotating one camera module around its optical axis.

Generally, in order to handle both mono and stereo camera systems, it is desired to share common production processes as much as possible in order to gain efficiency and throughput, hence a modular approach for the camera eyes. It is also critical to maintain focus over the temperature envelope for any automotive camera.

The image sensor is part of the printed circuit board which is positioned in a predetermined position and orientation versus the lens objective, so that the light entering through the lens objective meets onto the image sensor in a predetermined direction. Therefore the proper orientation and position of the image sensor to the lens objective is a very important criterion for the quality of the camera and the generated images.

Therefore it is the object of the invention to provide an easy and cost effective attachment for a camera module and an easy and cost effective camera module without any disadvantages for the quality of the images generated by the camera.

The object of the invention is solved by an attachment comprising the features of claim 1 and by a camera module comprising the features of claim 6. Further preferred embodiments are contained in the subclaims, the figures and the related description.

According to claim 1 it is suggested an attachment in which the camera module is extending with the lens objective through an opening of the camera housing, and the camera module is provided with at least one radial protruding abutment, which overlaps the rim of the opening at an inner side of the camera housing when the camera is mounted in the camera housing, and a retainer is provided at the inner side of the camera housing, and at least one spring is provided which is supported at a first end by the retainer and which tensions the camera module with the abutment with a second end against the camera housing.

The advantage of the suggested solution can be seen therein, that the attachment is realized only by spring forces. The camera module is clamped between the retainer and the camera housing, which may be handled in a very easy manner during the assembly process. Furthermore the camera module may be attached by an easy attachment movement with pushing the camera module with the lens objective into the opening and moving the abutment with the spring between the opening and the supporting surface of the retainer. Furthermore the maximum forces acting on the camera module can be restricted by the spring loaded attachment, so that low impacts do not have any influence on the camera module and the attachment. As the camera module is attached with the lens objective and the printed circuit board in a preassembled status the orientation and arrangement of the image sensor on the PCB in relation to the lens objective is not influenced by the attachment. Moreover it is possible to perform the adjustment of the lens objective versus the image sensor with a much higher accuracy before the attachment of the camera module during the assembly process of the lens objective and the PCB in a special device.

Furthermore it is suggested to provide several single springs, which are tensioning the camera module. The suggested solution is advantageous as a failure of one of the springs does not result in a failure of the attachment at all as the camera module is still fixed by the remaining springs which are not defect.

In this case it is preferred that the single springs are arranged in equal distances to each other, so that the camera module may be fixed with equally distributed attachment forces. The single springs are dimensioned identical so that they act with identical tensioning forces onto the camera module.

Furthermore it is suggested, that the retainer comprises at least one tab, which is attached at the camera housing. The tab is extending to the camera module or to the inside of the camera housing and provides an abutment at the camera housing for the camera module.

In this case the tab may be attached by casting with one the parts of the camera housing. The tab is inserted in the casting form before starting the casting process and is fixed after the casting by the casting material surrounding the tab without further attachment means. Alternatively the tabs may also be mounted in a one-shot casting method where tools for the tabs are moved separately.

Furthermore it is suggested a camera module for a motor vehicle, comprising a lens objective, a printed circuit board mounted at a backside of the lens objective and an image sensor arranged on the printed circuit board, wherein the camera module comprises at least one integrated spring extending to the outside of the camera module for mounting the camera module in a camera housing. The suggested camera module may be attached in the camera housing in a very easy and cost effective manner by using the integrated spring. The spring may be formed when forming the housing of the lens objective or of the printed circuit board or it may be mounted in a separate step at the camera module before mounting the camera module in the camera housing.

Furthermore the camera module may comprise at least one abutment which is arranged in a predetermined position at the camera module in relation to the spring to mount the camera module with the abutment and the spring between two camera housings with loading the spring. The abutment and the spring provide two surfaces to clamp the camera module between two camera housings, wherein the spring provides an elasticity to enable a tensioning of the camera module.

In the following the invention shall be illustrated on the basis of preferred embodiments with reference to the accompanying drawings, wherein:
- Fig. 1: shows a camera module attached at a camera housing; and
- Fig. 2: shows a camera module fixed by a bayonet clamping principle; and
- Fig. 3: shows a single spring for mounting the camera module.

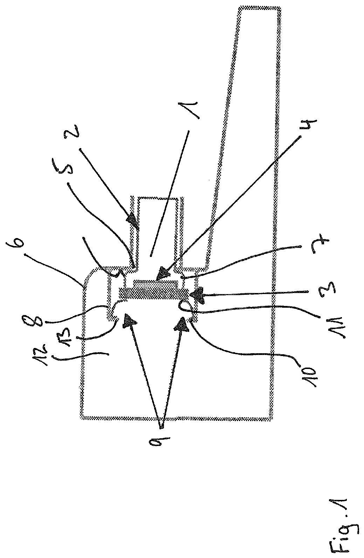

In Figure 1 it is shown a camera module 1 attached at a camera housing 6 like described in the following. The camera housing 6 might be a separate part or also a part of the vehicle structure, which is preferably located behind the windscreen.

The camera housing 6 comprises an opening 5 and a cavity 12 extending to the interior side of the vehicle. Furthermore a retainer 8 is attached at the inner side of the camera housing 6 extending into the cavity 12. The retainer 8 is realized by two single arms which are provided at their free ends with radial inwardly directed flanges 13. The retainer 8 may be mounted by separate attachment means at the wall of the camera housing 6 or it may be also formed as an integrated part of the camera housing 6 when forming the camera housing 6.

The camera module 1 comprises as basic components a lens objective 2 and a printed circuit board (PCB) 3 with an image sensor 4 arranged thereon. The lens objective 2 and the printed circuit board 3 are preassembled to a sub-unit, with a lens objective 2 having a predefined position and orientation to the image sensor 4 arranged on the PCB, which is not influenced by the attachment of the camera module 1 as the camera module 1 is attached as a unit.

The camera module 1 extends with the lens objective 2 through the opening 5 and comprises a radial protruding abutment 7, with which the camera module 1 overlaps the rim of the opening 5 at the inner side of the camera housing 6 in the cavity 12. The camera module 1 is extending into the cavity 12, between by the retainer 8, which is realized here by two single arms with the flanges 13 arranged at the ends of the arms.

The attachment of the camera module 1 is realized by one or several springs 9, which are supported at their first ends 10 at the inside surface of the flange 13. The springs 9 are abutting with their second ends 11 at the backside of the PCB tensioning the camera module 1 with the radial abutment 7 against the rim of the opening 5, so that the camera module 1 is clamped with the abutment 7 and the springs 9 between the rim of the opening 5 of the camera housing 6 and the flanges 13 of the arms of the retainer 8.

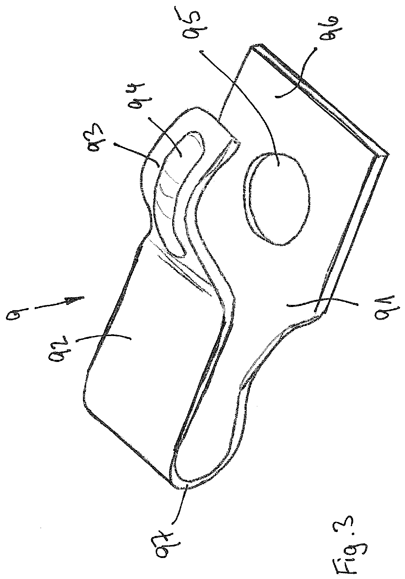

In Figure 3 it is shown a possible embodiment of the single spring 9. The spring 9 comprises a first section 91 and a second section 92, wherein the second section 92 is folded in a fold 97 on the first section 91. The first section 91 comprises an attachment section 96 with an opening 95 for fixing the spring 9 at the camera module 1. The second section 92 comprises a spring arm 93, which is bent outwardly and comprises a cam 94 extending to the outside. The spring arm 93 and the cam 94 are provided to exert the necessary spring forces and may be used additionally to fix the camera module 1 by latching the spring arm 93 and/or the cam 94 into complementary notches at the flange 13 of the retainer 8 or at the rim of the opening 5. The spring 9 may be attached by inserting it into the cavity for casting one of the parts of the camera module 1 or of the camera housing 6 with the first section 91 for example. The first section 91 is then fixed by casting the part, while the second section 92 is extending to the outside providing a resilient abutment for the attachment of the camera module 1. The spring 9 may be also attached by screws extending through the opening 95 at the retainer 8 or at the camera module 1.

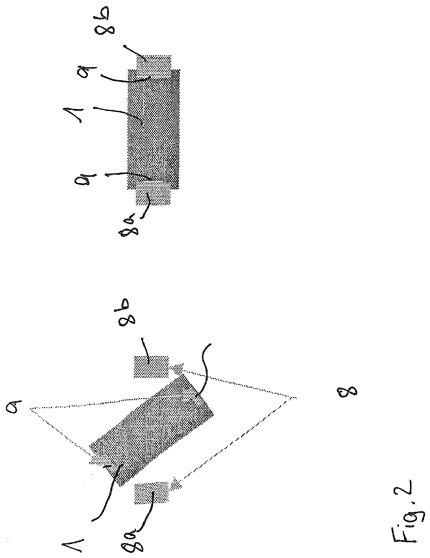

The camera module 1 shown in the Figures 1 and 2 may be provided with two or more springs 9 shown in Figure 3, which may be attached at predetermined positions preferably equally distanced to each other at the camera module 1, so that the camera module 1 is loaded with equally distributed spring forces.

In Figure 2 it is shown the camera module 1 from another view. The camera module 1 is provided with two integrated or attached single springs 9, and the retainer 8 is provided with two separated abutment surfaces 8a and 8b. The camera module 1 can be attached like a bayonet by turning the camera module 1 and tensioning the springs 9 versus the abutment surfaces 8a and 8b. The camera module 1 may be tensioned by the acting spring forces in the same way versus the camera housing 6 like described above.

The camera module 1 shown in the Figures 1 and 2 may be provided with two or more springs 9 shown in Figure 3, which may be attached at predetermined positions preferably equally distanced to each other at the camera module 1, so that the camera module 1 is loaded with equally distributed spring forces.

The flanges 13 at the retainer 8 may be designed as tabs, which are mounted at the retainer 8 in a casting process by inserting the tabs in the cavity before filling the material like for example aluminum in the cavity for forming the camera housing 6.

The camera module 1 in the embodiment shown in figure 1 may be mounted very easy without any tools or additional attachment means by inserting the camera module 1 with the springs 9 between the arms of the retainers 8 and with the lens objective 2 through the opening 5 into a position in which the springs 9 are latching behind the flanges 13 or tabs of the retainer 8.

The springs 9 are attached at the PCB which is preferred, but it is also possible to attach the springs 9 at the retainer 8, the flanges 13 or at the tabs. The advantage by attaching the springs 9 at the PCB can be seen therein that the springs 9 are inserted together with the camera module 1 and with the PCB into the camera housing 6 having a fixed attachment position at the PCB.

The retainer 8 may be designed as cylindrical part or also as a group of several single arms extending into the cavity 12 which are made as a casting part for example of aluminum. The retainer 8 is designed as a rigid part, which is able to transmit the necessary attachment forces of the camera module 1.

## Claims

1. An attachment for a camera module (1) in a camera housing (6), wherein the camera module (1) comprises
- a lens objective (2),
- a printed circuit board (3) mounted at a backside of the lens objective (2), and
- an image sensor (4) arranged on the printed circuit board (3),
**characterized in that**
- the camera module (1) is extending with the lens objective (2) through an opening (5) of the camera housing (6), and
- the camera module (1) is provided with at least one radial protruding abutment (7), which overlaps the rim of the opening (5) at an inner side of the camera housing (6) when the camera module (1) is mounted in the camera housing (6), and
- a retainer (8) is provided at the inner side of the camera housing (6), and
- at least one spring (9) is provided which is supported at a first end (10) by the retainer (8) and which tensions the camera module (1) with the abutment (7) via a second end (11) against the camera housing (6).

2. The attachment according to claim 1, **characterized in that**
- several single springs (9) are provided, which are tensioning the camera module (1).

3. The attachment according to claim 2, **characterized in that**
- the single springs (9) are arranged in equal distances to each other.

4. The attachment according to one of the preceding claims, **characterized in that**,
- the retainer (8) comprises at least one tab, which is attached at the camera module (1) and/or at the camera housing (6).

5. The attachment according to claim 4, **characterized in that**,
- the tab is attached by casting with one of the parts of the camera module (1) and/or one the parts of the camera housing (6).

6. A camera module (1) for a motor vehicle, comprising
- a lens objective (2),
- a printed circuit board (3) mounted at a backside of the lens objective (2), and
- an image sensor (4) arranged on the printed circuit board (3),
**characterized in that**,
- the camera module (1) comprises at least one integrated spring (9) extending to the outside of the camera module (1) for mounting the camera module (1) in a camera housing (6) .

7. The camera module (1) according to claim 6, **characterized in that**,
- the camera module (1) comprises at least one abutment (7) which is arranged in a predetermined position at the camera module (1) in relation to the spring (9) to mount the camera module (1) with the abutment (7) and the spring (9) between two walls of the camera housings (6) with loading the spring (9).
